# EUROPEAN PATENT APPLICATION

(11) **EP 2 899 223 A1**
(43) Date of publication of application: **29.07.2015**
(21) Application number: 13838853.3
(22) Date of filing: 18.09.2013
(51) Int. Cl.: C08G 79/00, B01J 23/75, B01J 23/755, B01J 37/16, B22F 9/24, B82Y 30/00, B82Y 40/00

(54) **METAL NANOPARTICLE COMPLEX AND METHOD FOR PRODUCING SAME**

(30) Priority: 20.09.2012 JP 2012206494
(71) Applicant: Kyoto University, Kyoto-shi, Kyoto 606-8501 (JP)
(72) Inventor: KITAGAWA, Hiroshi, Kyoto-shi Kyoto 606-8502 (JP); YAMADA, Teppei, Kyoto-shi Kyoto 606-8502 (JP); KOBAYASHI, Hirokazu, Kyoto-shi Kyoto 606-8502 (JP); MUKOYOSHI, Megumi, Kyoto-shi Kyoto 606-8502 (JP)
(74) Representative: Held, Stephan
(86) International application number: PCT/JP2013/075109
(87) International publication number: WO 2014/046107

(57) **Abstract**

The present invention provides a metal nanoparticle composite having a structure, in which metal nanoparticles are dispersed in an organic structure, the organic structure including: a structure of a porous coordination polymer (PCP) or metal-organic framework (MOF) containing a metal and a polyvalent ligand capable of reducing the metal; and carbon.

## Description

### Technical Field

The present invention relates to a metal nanoparticle composite and a manufacturing method for the metal nanoparticle composite.

Note that herein a MOF and a PCP are sometimes collectively referred to as "PCP".

### Background Art

Hitherto, a large number of PCP/metal nanoparticle composites have been developed. In order to efficiently realize reactions peculiar to the composites, it is necessary to develop a composite in which metal nanoparticles are located in a PCP so as to be in direct contact therewith. Further, from the viewpoint of a manufacturing cost of the composite, there is a demand for a method of manufacturing a PCP/metal nanoparticle composite easily and reliably.

In order to manufacture the PCP/metal nanoparticle composites, there has been used a procedure involving synthesizing metal nanoparticles and covering the circumference of the metal nanoparticles with a PCP or a procedure involving synthesizing metal nanoparticles in (or outside of) a synthesized PCP and embedding the metal nanoparticles in the PCP.

In Non Patent Literature 1, a composite of metal nanoparticles and a PCP is formed after the PCP is produced in advance. Therefore, the composite has a structure in which the metal nanoparticles each adhere to an outside of the PCP or the vicinity of a surface thereof, and thus an effect of the composite of the metal nanoparticles and the PCP is limited.

In Non Patent Literature 2, metal ions (Al, Cu) and a ligand (bpdc, btc) are allowed to act on each other in the presence of iron oxide to form a composite of the metal ions and the ligand. This composite is used for an application such as a sustained release preparation of a drug. By virtue of a magnetic property, the iron oxide serves to transport the composite to an intended position through use of a magnet. The iron oxide is merely integrated with a PCP in part of surfaces of iron oxide nanoparticles, and iron oxide particles are not present in the PCP.

Non Patent Literature 3 discloses a technology of precipitating ruthenium in a MOF through use of CVD. However, this method has a problem in that ruthenium is liable to be precipitated on a surface of the MOF, and hence a size of the ruthenium metal precipitated in the vicinity of the surface increases whereas a precipitated amount of the ruthenium metal in the vicinity of the center of the MOF decreases.

In Non Patent Literature 4, a composite containing nickel nanoparticles in a mesoporous MOF is disclosed, and activity as a reducing catalyst of the composite is compared to that of Raney nickel. However, the catalyst activity of the composite is substantially the same as that of Raney nickel, and thus there is a demand for further improvement in the catalyst activity.

### Citation List

### Non Patent Literature

[NPL 1] Eur. J. Inorg. Chem., 2010, 3701-3714
[NPL 2] ChemComm, 2011, 47, 3075-3077
[NPL 3] J. Am. Chem. Soc., 2008, 130, 6119-6130
[NPL 4] ChemComm, 2010, 46, 3086-3088

### Summary of Invention

### Technical Problem

It is an object of the present invention to manufacture a composite in which metal nanoparticles are dispersed without using a protecting agent.

### Solution to Problem

The present invention provides a composite and manufacturing method for the composite as described below.
Item 1. A metal nanoparticle composite having a structure, in which metal nanoparticles are dispersed in an organic structure, the organic structure including: a structure of a porous coordination polymer (PCP) or metal-organic framework (MOF) containing a metal and a polyvalent ligand capable of reducing the metal; and carbon.
Item 2. A metal nanoparticle composite according to Item 1, in which the metal nanoparticles each include as a metal one kind or two or more kinds of metals belonging to Groups 1 to 12 of the periodic table.
Item 3. A metal nanoparticle composite according to Item 2, in which the metal nanoparticles each include one kind of metal or an alloy of two or more kinds of metals selected from the group consisting of gold, platinum, silver, copper, ruthenium, tin, palladium, rhodium, iridium, osmium, nickel, cobalt, zinc, iron, yttrium, magnesium, manganese, titanium, zirconium, and hafnium.
Item 4. A metal nanoparticle composite according to any one of Items 1 to 3, in which the organic structure includes carbon at least partially.
Item 5. A metal nanoparticle composite according to Item 4, in which the carbon is selected from the group consisting of glassy carbon, graphite, a carbon onion, coke, a carbon shaft, a carbon nanowall, a carbon nanocoil, a carbon nanotube, a carbon nanotwist, a carbon nanofiber, a carbon nanohorn, a carbon nanorope, and carbon black.
Item 6. A manufacturing method for the metal nanoparticle composite of any one of Items 1 to 5, the metallic nanoparticle composite having a structure, in which metal nanoparticles are dispersed in an organic structure, the manufacturing method including heating a porous coordination polymer (PCP) or metal-organic framework (MOF) containing a metal and a polyvalent ligand capable of reducing the metal to precipitate metal nanoparticles.
Item 7. A manufacturing method according to Item 6, in which the heating is performed under vacuum.

### Advantageous Effects of Invention

The composite of the present invention allows metal nanoparticles each having high activity to be uniformly dispersed in a porous organic structure. Therefore, the composite of the present invention has high activity as a catalyst such as a catalyst for organic synthesis or an electrode catalyst and is extremely useful.

Further, the ratio between the organic structure and the metal nanoparticles can be adjusted with a heating time and a heating temperature. That is, the physical properties of the composite can be easily controlled by changing the ratio between the organic structure derived from the polyvalent ligand of a complex and the metal nanoparticles.

In one preferred embodiment, in the case where the composite of the present invention is heated to decompose the organic substance, the reduction in weight is 70 wt% or less. That is, the ratio of the metal nanoparticles is very large in the composite of the present invention. As a result, the characteristics of the metal nanoparticles can be exhibited sufficiently.

As related-art methods of introducing metal nanoparticles into a complex such as a PCP, there are given a procedure involving synthesizing metal nanoparticles and forming a composite of the metal nanoparticles with the complex such as the PCP and a procedure involving synthesizing the complex such as the PCP and synthesizing the metal nanoparticles. In both of the procedures, reactions are required to be performed in a number of stages. Further, it is difficult to obtain a composite in which the metal nanoparticles are singly-dispersed in the complex such as the PCP.

The present invention enabled, for the first time, a composite to be manufactured easily, the composite including metal nanoparticles dispersed in an organic structure derived from a PCP, the metal nanoparticles and the organic structure derived from the PCP or the like being in direct contact with each other without using a protecting agent.

### Brief Description of Drawings

FIG. 1 shows results of powder X-ray diffraction of a Ni composite obtained in Example 1. The structure of a PCP remained substantially completely at 250°C-12h. However, only a part of the structure of the PCP remained along with the increase in temperature to 300°C-12h and 350°C-12h, and the structure of the PCP disappeared completely at 400°C-12h.
FIG. 2 shows scanning transmission electron microscope (STEM) images of the Ni composite (400°C-12h) obtained in Example 1. In particular, a BF STEM image clearly shows the structure of onion carbon. Only a peak of Ni is observed from an observation sample: 400-12h XRPD.
FIG. 3 shows high-resolution transmission electron microscope (HRTEM) images of the Ni composite (400°C-12h) obtained in Example 1. A sheet-like organic substance similar to onion carbon is shown.
It was clarified that Ni nanoparticles were uniformly dispersed on a surface of the composite and in the composite.
FIG. 4 shows Raman measurement results of the Ni composite (400°C-12h) obtained in Example 1 and a PCP sample (Ni₂ (dhtp)) before heat treatment under vacuum. A peak of onion carbon was confirmed in the Ni composite (400°C-12h).
FIG. 5 shows Raman measurement results of the Ni composites (250°C, 300°C, 350°C, 400°C, 6h, 12h, 24h) obtained in Example 1 and the PCP sample (Ni₂(dhtp)) before heat treatment under vacuum.
FIG. 6 shows results of N₂ adsorption at 77 K of the Ni composite obtained in Example 1. The adsorption amount at a low pressure decreases in composites synthesized by heating at 300°C, 350°C, and 400°C for 12 hours, which indicates that the structure of a MOF is broken. A hysteresis was observed in the composite of 300°C-12h.
FIG. 7 shows a result of powder X-ray diffraction and a high-resolution transmission electron microscope (HRTEM) image of a Co composite obtained in Example 2. It was verified that a composite in which metal nanoparticles were uniformly dispersed was similarly obtained also from Co.
FIG. 8 shows magnetic measurement results (left: composite, right: Ni₂(dhtp)) at 2 K and 300 K.
FIG. 9 shows a cyclic voltammogram in an ethanol oxidation reaction with an electrode catalyst of 350-12h, 400-12h (composites of the present invention obtained by treating Ni-MOF-74 at 350°C and 400°C, respectively, for 12 hours), Ni bulk + carbon (Comparative Example), and untreated Ni-MOF-74. The composites of the present invention (350-12h, 400-12h) exhibited high catalyst activity.
FIG. 10 shows results of powder X-ray diffraction of aNi complex obtained in Production Example 1 when heated at 350°C for 12 hours under the atmospheric pressure (in the air). It was shown that a Ni oxide (NiO) composite was obtained.

### Description of Embodiments

A composite of the present invention is a composite in which metal nanoparticles are dispersed in an organic structure. In a preferred embodiment, the composite of the present invention is a composite in which the metal nanoparticles are dispersed at high density and/or uniformly in the organic structure.

The composite of the present invention can be manufactured by heating a complex under reduced pressure, an inert atmosphere, a reducing atmosphere, or an oxidizing atmosphere, preferably under vacuum. In the case where the complex is heated under reduced pressure (preferably under vacuum), an inert atmosphere, or a reducing atmosphere, metal ions in the complex are reduced to form nanoparticles of a metal simple substance. On the other hand, in the case where the complex is heated under an oxidizing atmosphere (atmosphere in which oxygen and the like are present), nanoparticles of a metal oxide can be obtained. As used herein, the term "metal nanoparticles" includes both nanoparticles of a metal simple substance (zero-valent) and nanoparticles of a metal oxide. Further, in the case where the complex such as a PCP or a MOF is formed of two or more metals, metal nanoparticles to be obtained can become an alloy.

In the case where the complex is heated under reduced pressure (preferably under vacuum), an inert atmosphere, a reducing atmosphere, or an oxidizing atmosphere, a polyvalent ligand forming the complex is converted into carbon. The degree of conversion of the polyvalent ligand into carbon depends on a heating temperature and a heating time. For example, in the case of a Ni composite described in Example 1, the structure of the PCP remains together with carbon at 250°C, 300°C, and 350°C, but the structure of the PCP disappears to be converted into carbon at 400°C. Thus, by adjusting the heating temperature and the heating time, the ratio of the structure portion of the complex such as the PCP or the carbon portion in the organic structure can be changed, and further the kind of carbon (glassy carbon, graphite, etc.) can be changed to an intended one. For example, in the case where a reactant in the form of a gas is allowed to react with the metal nanoparticles (catalyst) through use of the structure of the PCP, it is advantageous to leave the structure of the PCP. In the case where a structure is desired in which carbon that is an organic structure and the metal nanoparticles are densely accumulated as in an electrode catalyst, it is sufficient that the structure derived from the PCP or the like be completely broken to increase the ratio of carbon, to thereby reduce the ratio of pores, by raising the heating temperature or extending the reaction time.

In this description, the organic structure may contain the polyvalent ligand forming the complex such as the PCP, and at least a part of the polyvalent ligand is replaced by a material such as carbon. The polyvalent ligand forming the complex reduces metal ions and gradually loses hydrogen to be changed to carbon. It is sufficient that the organic structure contain various organic materials involved in the process of change of a part of the organic polyvalent ligand to carbon.

The complex to be used as a raw material for manufacturing the composite contains an organic polyvalent ligand and metal ions. The organic polyvalent ligand includes a divalent or more-valent organic ligand, and the divalent or more-valent organic ligand is coordinated with two separate (adjacent) metal ions to form a complex spreading one-dimensionally, two-dimensionally, or three-dimensionally. In the complex to be used in the manufacturing method of the present invention, it is required that a metal complex be polymerized at least one-dimensionally, in other words, two or more metal ions be coordinated with one organic ligand. Such a complex includes the MOF, the PCP, and like, but does not include a mononuclear complex.

The PCP generally includes two or more layers (for example, from 2 to 100 layers, preferably from 3 to 50 layers, more preferably from 4 to 30 layers, particularly preferably from 4 to 20 layers) formed of a metal and a ligand, and the layer is repeated. A composite containing various metal nanoparticles is obtained by changing the metal ions for each layer.

In this description, the complex such as the MOF or the PCP is formed of metal ions and an organic ligand and may contain counter anions. Examples of the the metal ions include metal ions of metals belonging to Groups 1 to 12 of the periodic table. Specific examples thereof include ions of gold, platinum, silver, copper, ruthenium, tin, palladium, rhodium, iridium, osmium, nickel, cobalt, zinc, iron, yttrium, magnesium, manganese, titanium, zirconium, hafnium, calcium, cadmium, vanadium, chromium, molybdenum, and scandium. Of those, ions of the following metals are preferred: magnesium, calcium, manganese, iron, ruthenium, cobalt, rhodium, nickel, palladium, copper, zinc, cadmium, titanium, vanadium, chromium, manganese, platinum, molybdenum, zirconium, scandium, and the like. The ions of the following metals are more preferred: manganese, iron, cobalt, nickel, copper, zinc, silver, platinum, palladium, ruthenium, rhodium, and the like. As the metal ions, one kind of metal ions may be used alone, or two or more kinds of metal ions may be used in combination. A composite containing the metal nanoparticles as an alloy can be obtained through use of a complex containing two or more kinds of metal ions.

Examples of the organic ligand forming the complex such as the MOF or the PCP include: a compound in which two, three, or four carboxyl groups are bonded to an aromatic ring of benzene, naphthalene, anthracene, phenanthrene, fluorene, indane, indene, pyrene, 1,4-dihydronaphthalene, tetralin, biphenylene, triphenylene, acenaphthylene, acenaphthene, or the like (the organic ligand may be mono-, di-, or tri-substituted with a substituent, for example, a halogen atom such as F, Cl, Br, or I, a nitro group, an amino group, an acylamino group such as an acetylamino group, a cyano group, a hydroxy group, methylenedioxy, ethylenedioxy, a linear or branched alkoxy group having 1 to 4 carbon atoms such as methoxy or ethoxy, a linear or branched alkyl group having 1 to 4 carbon atoms such as methyl, ethyl, propyl, tert-butyl, or isobutyl, SH, a trifluoromethyl group, a sulfonic group, a carbamoyl group, an alkylamino group such as methylamino, or a dialkylamino group such as dimethylamino) ; an unsaturated dicarboxylic acid such as fumaric acid, maleic acid, citraconic acid, or itaconic acid; and a nitrogen-containing aromatic compound that can be coordinated by two or more nitrogen atoms in its ring such as pyrazine, 4,4'-bipyridyl, or diazapyrene (which may be mono-, di-, or tri-substituted with the substituent). Preferred examples of the divalent or more-valent organic ligand include isophthalic acid and terephthalic acid. It is preferred that the organic ligand be an electron-donating group such as OH, an alkoxy group, or an alkyl group because the metal ions are easily reduced during heating of the complex. For example, in the case where the organic ligand is 2, 5-dihydroxyterephthalic acid, the organic ligand can be oxidized to have a quinone structure during heating of the complex, and hence there is a possibility that the quinone structure may accelerate the reduction of the metal ions and the formation of the metal nanoparticles caused by the reduction of the metal ions. In the case where the ligand is neutral, the ligand has counter anions required for neutralizing the metal ions. Examples of such counter anions include a chloride ion, a bromide ion, an iodide ion, a sulfate ion, a nitrate ion, a phosphate ion, a trifluoroacetate ion, a methanesulfonate ion, a toluenesulfonate ion, a benzenesulfonate ion, and a perchlorate ion.

The organic ligand forming the complex such as the MOF or the PCP may include a monodentate ligand. When the ratio of the monodentate ligand increases, the size of the complex can be reduced, and consequently the size of a composite to be obtained can be reduced. Examples of the monodentate ligand include but are not limited to a ligand containing one carboxyl group, such as benzoic acid, and a ligand containing one coordinating nitrogen atom, such as pyridine and imidazole.

The complex containing the metal ions and the organic ligand includes PCPs having two-dimensional pores such as sheet-like ones or three-dimensional pores containing as a constituent component a bidentate ligand in which a plurality of sheets are coordinated at an axial position, and for example, the PCPs described below may also be used.
IRMOF-1, Zn₄O(BDC)₃ (H₂BDC= benzenedicarboxylic acid)
MOF-69C, Zn₃(OH2) (BDC)₂
MOF-74, M₂(DOBDC) (H₂DOBDC=2,5-dihydroxyterephthalic acid, M=Zn, Co, Ni, Mg)
HKUST-1, Cu₃(BTC)₂ (H₃BTC=1,3,5-benzenetricarboxylic acid)
MOF-508, Zn(BDC)(bipy)_{0.5}
Zn-BDC-DABCO, Zn₂(BDC)₂(DABCO),
(DABCO=1,4-diazabicyclo[2.2.2]-octane)
Cr-MIL-101, Cr₃F(H₂O)₂O(BDC)₃
Al-MIL-110, Al₈ (OH)₁₂{(OH)₃(H₂O)₃}[BTC]₃,
Al-MIL-53, Al(OH)[BDC]
ZIF-8, Zn(MeIM)₂, (H-MeIM=2-methylimidazole)
MIL-88B, Cr₃OF (O₂C-C₆H₄-CO₂)₃
MIL-88C, Fe₃O(O₂C-C₁₀H₆-CO₂)₃
MIL-88D, Cr₃OF(O₂C-C₁₂H₈-CO₂)₃

CID-1 [Zn₂(ip)₂(bpy)₂] (Hip=isophthalic acid, bpy=4,4'-bipyridine)

The PCP to be used in the the present invention is disclosed in, for example, the following literatures and reviews (Angew. Chem. Int. Ed. 2004, 43, 2334-2375.; Angew. Chem. Int. Ed. 2008, 47, 2-14.; Chem. Soc. Rev., 2008, 37, 191-214.; PNAS, 2006, 103, 10186-10191.; Chem. Rev., 2011, 111, 688-764.; Nature, 2003, 423, 705-714.), but is not limited thereto. Any known PCP or any PCP that can be produced in future can be widely used.

It is considered that, in the manufacturing method of the present invention, the metal ions forming the complex such as the MOF or the PCP react with the organic ligand by heating to cause an oxidation-reduction reaction, and thereby the metal ions are converted into the metal nanoparticles. Thus, the metal nanoparticles become nanoparticles containing the metal forming the complex. The metal ions are reduced to form the metal nanoparticles by heating the complex under reduced pressure, preferably under vacuum. The metal nanoparticles are formed in a large number simultaneously on the surface of the complex and in the complex to form a composite in which the metal nanoparticles are dispersed. When the complex is heated, small metal nanoparticles gradually grow to become large metal nanoparticles. Thus, the size of the metal nanoparticles can be controlled by controlling the conditions of heating of the complex.

As used herein, the term "high density" means a composite containing the metal nanoparticles at a ratio of from 0.1 to 85 mass%, preferably from 1 to 85 mass%, more preferably from 10 to 85 mass%. When the complex is heated, at first, small metal nanoparticles are formed in a large number on the surface of the complex and in the complex. The metal nanoparticles are formed in a large number on the surface of the complex and in the complex as described above, and thus a composite in which the metal nanoparticles are uniformly dispersed is obtained. The metal ions are changed to the metal nanoparticles by raising the heating temperature or extending the heating time. Therefore, although the weight ratio of the metal nanoparticles is small in an initial stage of the reaction by heating, the small metal nanoparticles are formed in a large number, and hence the resultant composite can be considered to have "high density".

The temperature during heating is about from 100 to 1,000°C, preferably about from 150 to 700°C, more preferably about from 200 to 650°C, still more preferably about from 250 to 650°C, particularly preferably about from 250 to 450°C.

The complex can be heated under reduced pressure, an inert atmosphere, a reducing atmosphere, or an oxidizing atmosphere, preferably under vacuum. The pressure under reduced pressure during the heating reaction is about 1,000 Pa or less, preferably 100 Pa or less, particularly about from 5 to 100 Pa.

The heating reaction time is about from 1 second to 30 days, preferably about from 1 hour to 7 days.

When the complex is heated under the above-mentioned conditions, the metal ions forming the complex are reduced to become nanoparticles of a metal simple substance. Further, the organic ligand is at least partially changed to, for example, carbon by heating. The organic structure of the composite is derived from the ligand of the complex.

In the metal nanoparticle composite according to a preferred embodiment of the present invention, the metal nanoparticles are substantially uniformly dispersed on the surface of the composite and in the composite. It can be confirmed through a TEM image that the metal nanoparticles are substantially uniformly dispersed.

The average particle diameter of the metal nanoparticles contained in the composite is about from 1 to 100 nm, preferably about from 1 to 20 nm. The average particle diameter of the metal nanoparticles in the composite can be confirmed through a microphotograph such as a TEM image. There is no particular limitation on the shape of the metal nanoparticles, and the metal nanoparticles may have any shape such as a spherical shape, an ellipsoidal shape, or a scale-like shape.

The ratio of the metal nanoparticles in the composite of the present invention is about from 0.05 to 95 wt%, preferably about from 0.1 to 85 wt%, more preferably about from 1 to 80 wt%, particularly preferably about from 2 to 75 wt%, and the ratio of the organic structure is about from 99.95 to 5 wt%, preferably about from 99.9 to 15 wt%, more preferably about from 99 to 20 wt%, particularly preferably about from 98 to 25 wt%. Note that, in the initial stage of the heating treatment of the complex, a part of the metal ions forming the complex become the metal nanoparticles, the ratio of the metal nanoparticles being increased by extending the reaction time or raising the reaction temperature, but the metal or metal ions derived from the complex may remain in the organic structure. Thus, the organic structure may contain inorganic components such as a metal or metal ions, and a metal oxide.

The metal nanoparticles are formed of a metal, an alloy, or a metal oxide.

The metal of the metal nanoparticles is derived from the metal complex such as the MOF or the PCP, and hence there is given the metal forming the metal complex. Note that, in the case where the metal complex is formed of two or more kinds of metals, the metal nanoparticles include an alloy, and in the case where the metal complex is oxidized during heating, the metal nanoparticles can become a metal oxide.

Examples of the metal forming the metal nanoparticles include metals belonging to Groups 1 to 12 of the periodic table, and alloys and oxides (including composite oxides) thereof. Specific examples thereof include gold, platinum, silver, copper, ruthenium, tin, palladium, rhodium, iridium, osmium, nickel, cobalt, zinc, iron, yttrium, magnesium, manganese, titanium, zirconium, and hafnium, and alloys, oxides, and composite oxides of two or more kinds of metals selected therefrom. Of those, more preferred examples thereof include gold, platinum, silver, copper, ruthenium, palladium, rhodium, iridium, osmium, nickel, cobalt, zinc, iron, yttrium, magnesium, and titanium, and alloys of two or more kinds thereof. Examples of the metal oxide include PtO₂, CuO, ruthenium(IV) oxide, rhodium oxide, ruthenium oxide, Fe₂O₃, Fe₃O₄, ZnO, and osmium(IV) oxide, and composite oxides containing two or more kinds of the metals.

In the case where the metal nanoparticles are nanoparticles of iron or an oxide thereof, the metal nanoparticles may have a body-centered cubic (BCC) lattice structure or a face-centered cubic (FCC) lattice structure.

The term "organic structure" refers to a structure derived from the organic ligand in which a part or a whole of the organic ligand is decomposed to remain by heating a structure such as the PCP, the MOF, or the like, which spreads one-dimensionally, two-dimensionally, or three-dimensionally and is formed of the organic ligand and the metal, underreducedpressure. Itispreferred that the structure derived from the PCP or the MOF remain in the organic structure. The structure derived from the PCP or the MOF can be confirmed by X-ray diffraction. When the heating under reduced pressure is performed at high temperature and/or for a long period of time, the structure derived from the PCP or the MOF is gradually broken to increase the ratio of the carbon-based material.

In one embodiment, in the case where the metal ions are reduced to form the metal nanoparticles, the metal ions are considered to have been reduced by the organic ligand. In this case, the organic ligand is oxidized. A long with the proceeding of the reaction, carbon is generated from the organic ligand, and the ratio of the carbon increases. Note that, the heating under reduced pressure may be performed in an inert atmosphere (containing inert gas such as nitrogen and argon), and when the heating under reduced pressure is performed in an oxidizing atmosphere (containing an oxidizing agent such as oxygen and ozone) or in a reducing atmosphere (containing a reducing agent such as hydrogen), the degree of oxidation or reduction of the "organic structure" can be changed. Further, in the case where the heating treatment is performed in an oxidizing atmosphere, the metal nanoparticles can be precipitated also as a metal oxide.

Examples of the carbon forming the organic structure include glassy carbon, graphite, a carbon onion, coke, a carbon shaft, a carbon nanowall, a carbon nanocoil, a carbon nanotube, a carbon nanotwist, a carbon nanofiber, a carbon nanohorn, a carbon nanorope, and carbon black.

It is preferred that the organic structure be porous. The metal nanoparticles are held in pores of the composite, and have exposed active surfaces of the metal nanoparticles while a part of the metal nanoparticles are supported by the organic structure. The ratio of the active surfaces is large, and hence the composite of the present invention is preferred as a material for providing the metal nanoparticles.

The composite of the present invention can be preferably used as a catalyst. As a combination of a gas to be catalyzed by the composite of the present invention, a metal nanoparticle catalyst, and a product, for example, the following combinations are given.

In one preferred embodiment, the composite of the present invention includes carbon and metal nanoparticles and has conductivity, the metal nanoparticles being held by the carbon without using a binder. Therefore, the composite of the present invention is very useful as an electrode catalyst.

**[Table 1]**

| Gas subjected to reaction | Metal nanoparticle catalyst | Product |
|---|---|---|
| Nitrogen, hydrogen | Iron oxide, iron, ruthenium, ruthenium-silver | Ammonia |
| Methane, water, carbon monoxide | Nickel oxide | Hydrogen |
| Methane, oxygen, carbon monoxide, carbon dioxide | Nickel oxide | Hydrogen |
| Carbon monoxide, hydrogen | Nickel-based catalyst, ruthenium | Methane |
| Carbon monoxide, water, carbon dioxide | Iron oxide, chromium oxide, copper oxide, zinc oxide, nickel oxide | Hydrogen |
| Carbon monoxide, oxygen | Platinum, palladium, gold, ruthenium | Carbon dioxide |
| Alcohol, oxygen | Gold, copper, platinum, palladium, ruthenium | Aldehyde, carboxylic acid |
| Carbon dioxide, hydrogen | Copper,copper-zincoxide | Methanol |
| Methanol, oxygen | Gold, copper | Formaldehyde, formic acid |
| Styrene, hydrogen | Palladium, platinum | Ethylbenzene |
| Acetylene, hydrogen | Palladium, platinum, nickel, cobalt oxide | Ethylene |
| Aldehyde, hydrogen | Palladium, platinum, nickel | Alcohol |
| Ethylene | Silver, rhenium | Ethylene oxide |
| Nitrogen oxide, hydrogen | Palladium, platinum, silver, silver-rhodium, copper, nickel, iron oxide, manganese oxide, rhodium | Nitrogen, carbon dioxide, water |
| Oxygen, hydrogen | Platinum, palladium, platinum-ruthenium | Water |
| propylene, hydrogen | Palladium, platinum | Propane |
| Butene, oxygen | Palladium, platinum | Butane |
| Ammonia | Ruthenium, palladium, platinum | Hydrogen, nitrogen |
| n-C6H14 water | Nickel, iron-copper | Methane, carbon monoxide, hydrogen, carbon dioxide |
| Nitro compound, hydrogen | Copper oxide, chromium oxide, nickel, cobalt oxide, zirconium oxide | Amine |

### Examples

Now, the present invention is described in more detail by way of Examples, but needless to say, the present invention is not limited to these Examples.

### Production Example 1: Preparation of PCP Complex

2,000 ml of DMF-ethanol-water (1:1:1 by volume) serving as a solvent, Ni(NO₃)₂·6H₂O (23.8 g), and 2,5-dihydroxyterephthalic acid (H₄dhtp, 4.8 g) were added to a 3,000-ml recovery flask, and a reaction was conducted with stirring at 100°C for 5 days. A precipitated three-dimensional structure metal complex (Ni₂ (dhtp)) was recovered by suction filtration and washed with methanol and water. Then, the resultant was dried under reduced pressure at 25°C for 24 hours to obtain 12 g of an intended metal complex (Ni₂ (dhtp)). It was confirmed by powder X-ray structure analysis that the intended metal complex was obtained. The obtained metal complex is sometimes hereinafter referred to as "Ni-MOF-74".

### Production Example 2: Preparation of PCP Complex

200 ml of DMF-ethanol-water (1:1:1 by volume) serving as a solvent, Co(NO₃)₂·6H₂O (2.4 g), and 2,5-dihydroxyterephthalic acid (H₄dhtp, 0.5 g) were added to a 300-ml recovery flask, and a reaction was conducted with stirring at 100°C for 5 days. A precipitated three-dimensional structure metal complex (Co₂(dhtp)) was recovered by suction filtration and washed with methanol and water. Then, the resultant was dried under reduced pressure at 25°C for 24 hours to obtain 0.8 g of an intended metal complex (Co₂(dhtp)). It was confirmed by powder X-ray structure analysis that the intended metal complex was obtained.

### Example 1

The Ni complex obtained in Production Example 1 was heated under reduced pressure (under vacuum) through use of a vacuum pump at each reaction temperature and each reaction time of Table 2 below to manufacture a Ni composite of the present invention.

**[Table 2]**

| Synthesis condition and batch name | | | | | |
|---|---|---|---|---|---|
| | 6 hours | 12 hours | 24 hours | 3 days | 7 days |
| 250°C | 250-6h | 250-12h | 250-24h | | 250-7d |
| 300°C | 300-6h | 300-12h | 300-24h | 300-3d | |
| 350°C | 350-6h | 350-12h | 350-24h | | |
| 400°C | 400-6h | 400-12h | 400-24h | | |

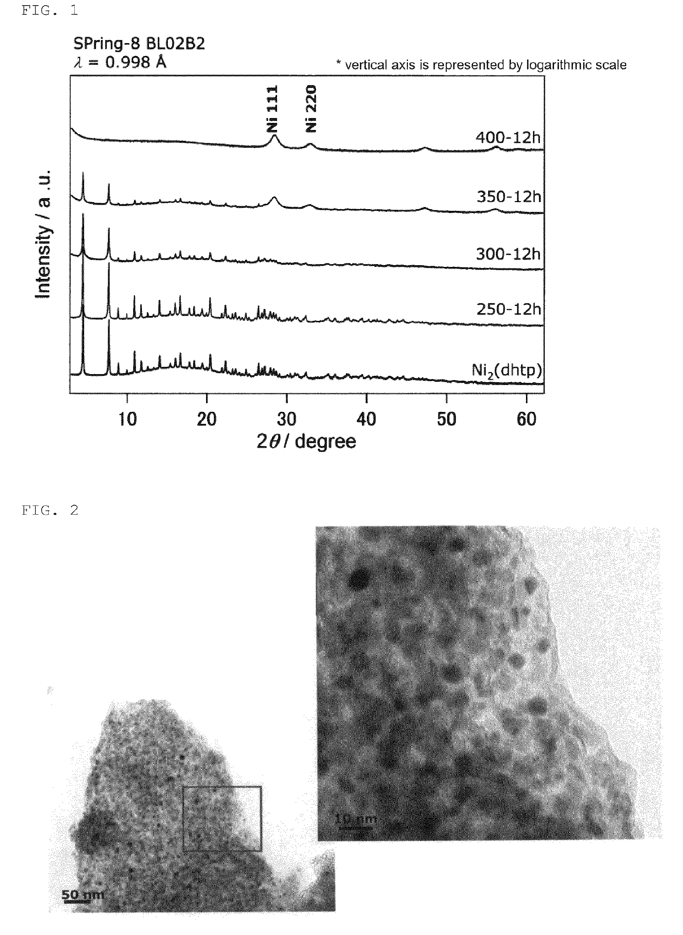

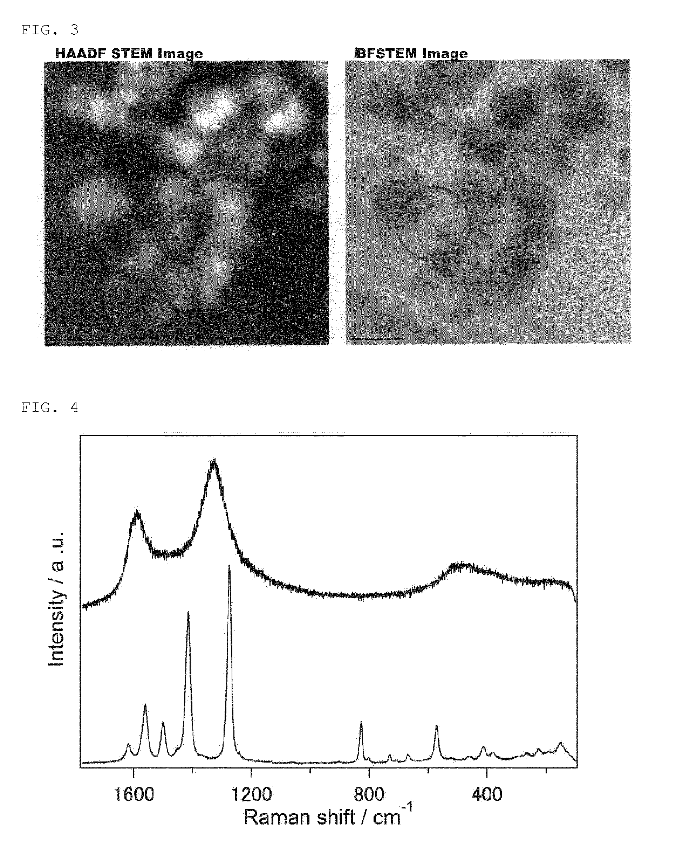

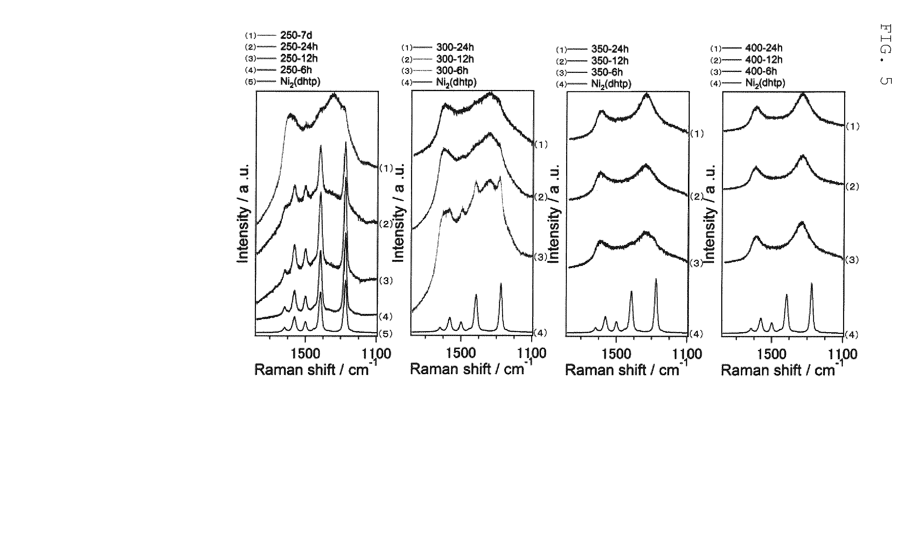

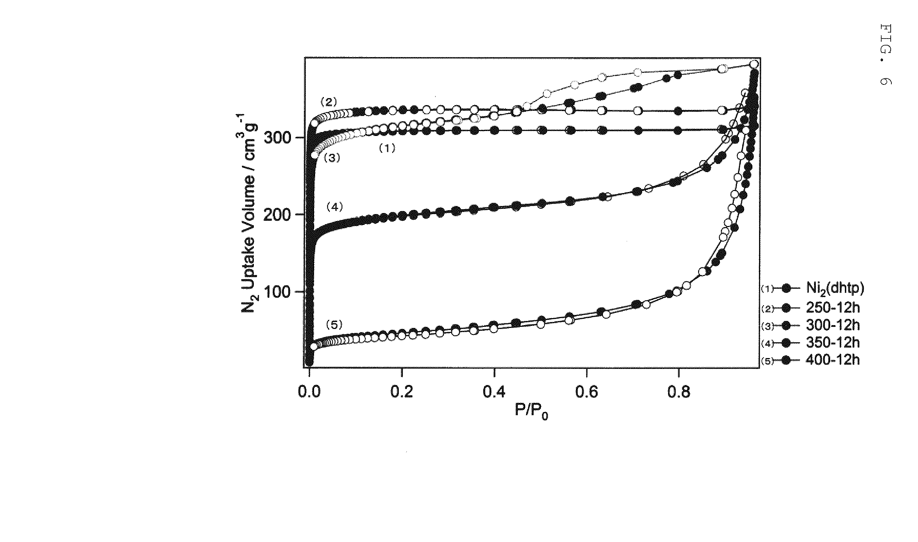

FIG. 1 shows results of powder X-ray diffraction of the obtained Ni composite. FIG. 2 shows scanning transmission electron microscope (STEM) images of the obtained Ni composite. FIG. 3 shows high-resolution transmission electron microscope (HRTEM) images of the obtained Ni composite. FIGS. 4 and 5 show Raman measurement results of the obtained Ni composite. FIG. 6 shows results of N₂ adsorption at 77 K of the obtained Ni composite.

### Example 2

The Co complex obtained in Production Example 2 was heated at 400°C for 18 hours under reduced pressure (under vacuum) through use of a vacuum pump to manufacture a Co composite of the present invention.

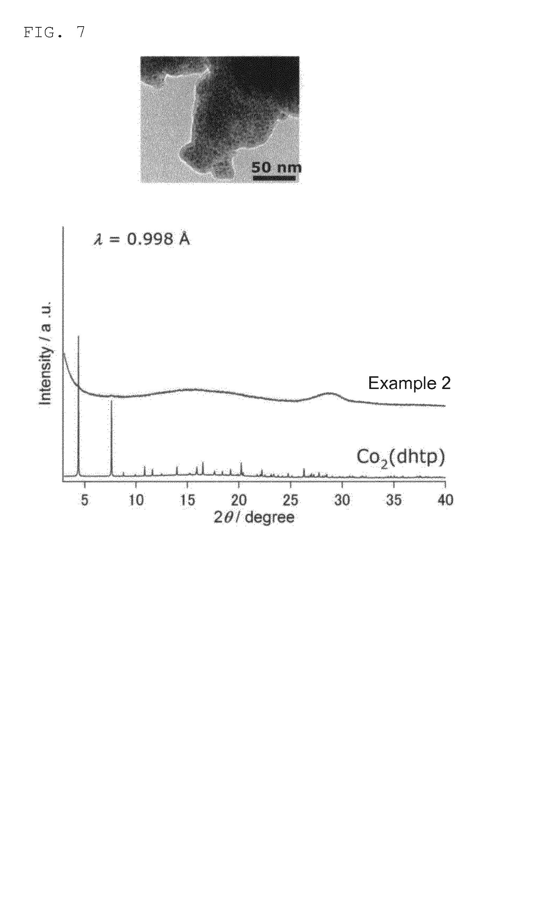

FIG. 7 shows a result of powder X-ray diffraction and a high-resolution transmission electron microscope (HRTEM) image of the obtained Co composite.

### Example 3

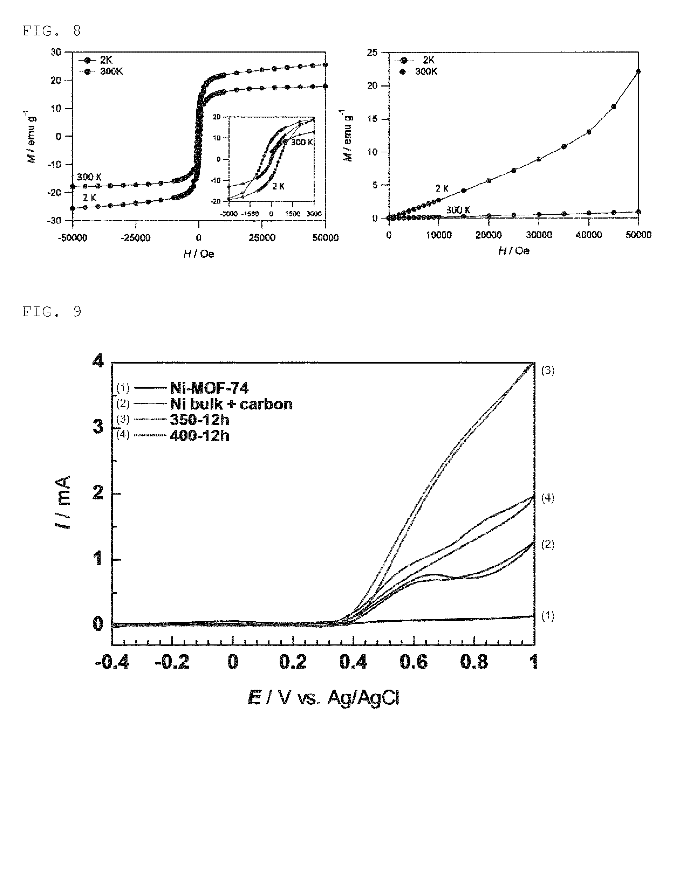

The Ni composite (400°C-12h) obtained in Example 1 was subj ected to magnetic measurement. 4.5 mg of the composite was packed into a gelatin capsule and solidified with an ethanol solution of PVP. The resultant was mounted on a SQUID measurement rod and measured for magnetic field dependence at 2 K and 300 K. Regarding the MOF, 3.1 mg of Ni₂ (dhtp) was wrapped with plastic wrap and measured for the magnetic field dependence in the same way as in the composite. FIG. 8 shows the results.

Hysteresis was observed at 2 K in the composite, but hysteresis was not observed in Ni₂(dhtp) at any temperature. Thus, it was found that the response to a magnet changed as the compositing reaction with Ni nanoparticles proceeds. The magnetic characteristics can be freely controlled by changing the reaction conditions to change the ratio of the Ni nanoparticles, and hence this result shows that the composite manufactured by the procedure using pyrolysis has the potential as a novel magnetic material.

### Example 4

An ethanol oxidation reaction was performed through use of the Ni composites (350°C-12h, 400°C-12h) obtained in Example 1 as an electrode catalyst. 10 mg of the composite was added to a mixed solvent containing 2 ml of ethanol and 100 µl of "Nafion (trademark) " [ten-fold diluted sample having a solid content concentration of 5 mass%, manufactured by DuPont], and the resultant was irradiated with an ultrasonic wave to obtain a suspension. 30 µL of the suspension was applied to a glassy carbon electrode (diameter: 3 mm, electrode area: 7.1 mm²) and dried to obtain a modified electrode. The modified electrode was immersed in a mixed solution containing sodium hydroxide having a concentration of 1.0 M and ethanol having a concentration of 0.5 M, and an electric potential was cycled at a scanning speed of 50 mV/s in a scanning range of from -0.45 to 1.00 V with respect to a silver-silver chloride electrode potential at room temperature under the atmospheric pressure in an argon atmosphere. FIG. 9 shows the results.

A cyclic voltammetry was performed in the same way through use of Ni-MOF-74 that was the raw material and a composite (Ni+carbon; Comparative Example) in which Ni particles were adsorbed to carbon as an electrode catalyst in place of the above-mentioned composites (350°C-12h, 400°C-12h). FIG. 9 also shows the results.

Note that, in the composite subjected to the heating treatment at 300°C-12h, the generated amount of the Ni nanoparticles was small, but a catalyst current corresponding to the ethanol oxidation reaction was observed sufficiently in the cyclic voltammogram. Thus, the inventors of the present invention confirmed that the composite subjected to the heating treatment at 300°C-12h was excellent in catalyst activity per unit weight, compared to the composite in which the Ni particles were adsorbed to carbon.

In the same way as in Literature 1 (Materials Letters, 2011, 65, 3396-3398), a current peak corresponding to the ethanol oxidation reaction can be confirmed in the vicinity of 0.6 V. A catalyst current corresponding to the ethanol oxidation reaction was observed also in the composite, and hence it was found that the composite had catalyst activity. Further, the samples of 350°C-12h and 400°C-12h had an ethanol oxidation current value higher than that of the sample using the Ni powder, and hence were found to exhibit high catalyst activity.

### Example 5

The Ni complex obtained in Production Example 1 was heated at 350°C for 12 hours under the atmospheric pressure (in the air) at each reaction temperature and each reaction time of Table 2 below to manufacture a Ni composite of the present invention. The Ni nanoparticles became a Ni oxide (NiO).

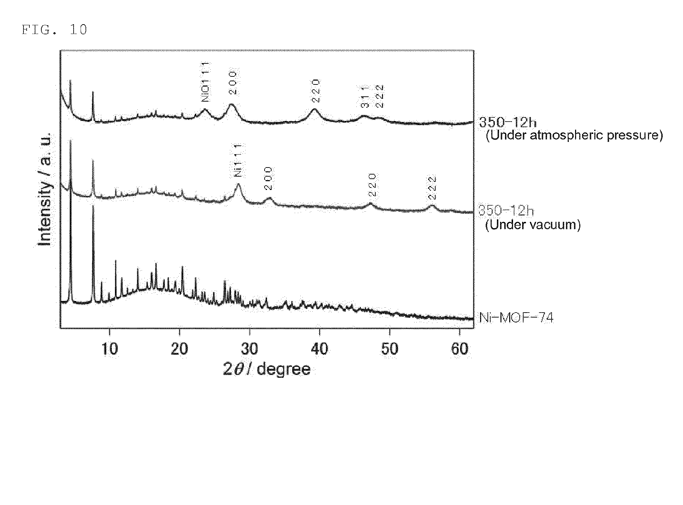

FIG. 10 shows results of powder X-ray diffraction of the obtained Ni composite.

## Claims

1. A metal nanoparticle composite having a structure, in which metal nanoparticles are dispersed in an organic structure,
the organic structure comprising: a structure of one of a porous coordination polymer (PCP) and metal-organic framework (MOF) containing a metal and a polyvalent ligand capable of reducing the metal; and carbon.

2. A metal nanoparticle composite according to claim 1, wherein the metal nanoparticles each comprise as a metal at least one kind of metals belonging to Groups 1 to 12 of a periodic table.

3. A metal nanoparticle composite according to claim 2, wherein the metal nanoparticles each comprise one kind of metal or an alloy of at least two kinds of metals selected from the group consisting of gold, platinum, silver, copper, ruthenium, tin, palladium, rhodium, iridium, osmium, nickel, cobalt, zinc, iron, yttrium, magnesium, manganese, titanium, zirconium, and hafnium.

4. A metal nanoparticle composite according to any one of claims 1 to 3, wherein the organic structure comprises carbon at least partially.

5. A metal nanoparticle composite according to claim 4, wherein the carbon is selected from the group consisting of glassy carbon, graphite, a carbon onion, coke, a carbon shaft, a carbon nanowall, a carbon nanocoil, a carbon nanotube, a carbon nanotwist, a carbon nanofiber, a carbon nanohorn, a carbon nanorope, and carbon black.

6. A manufacturing method for the metal nanoparticle composite of any one of claims 1 to 5, the metallic nanoparticle composite having a structure, in which metal nanoparticles are dispersed in an organic structure,
the manufacturing method comprising heating one of a porous coordination polymer (PCP) and metal-organic framework (MOF) containing a metal and a polyvalent ligand capable of reducing the metal to precipitate metal nanoparticles.

7. A manufacturing method according to claim 6, wherein the heating is performed under vacuum.
